(19) Europäisches Patentamt

European Patent Office

Office européen des brevets

(11) **EP 1 092 464 A2**

(12) **EUROPÄISCHE PATENTANMELDUNG**

(43) Veröffentlichungstag:
**18.04.2001 Patentblatt 2001/16**

(51) Int. Cl.⁷: **B01D 46/24**, B01D 46/42, B05B 1/26

(21) Anmeldenummer: **00121775.1**

(22) Anmeldetag: **05.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.10.1999 DE 19949893**

(71) Anmelder:
**SULT Staub- und Lufttechnik GmbH
71083 Herrenberg (DE)**

(72) Erfinder:
**Schröder, Ulrich, Dipl.-Ing.
72218 Wildberg (DE)**

(74) Vertreter: **Hössle & Kudlek
Patentanwälte
Diemershaldenstrasse 23
70184 Stuttgart (DE)**

(54) **Einströmdüse für eine Filterpatrone**

(57)     Einströmdüse für eine Filterpatrone, mit einem dem Querschnitt der Filterpatrone angepaßten Ringkörper (12) aus formstabilem Material, auf dem mindestens eine sich insbesondere vom Mittelpunkt oder durch den Mittelpunkt des Ringkörpers (12) radial erstreckende Luftleitrippe (16) angeordnet ist, wobei konzentrisch zum Mittelpunkt des Ringkörpers (12) ein mit der mindestens einen Luftleitrippe (16) verbundener, aerodynamisch geformter Kompressionskern (20) vorgesehen ist.

Fig. 1

**Beschreibung**

Die vorliegende Erfindung betrifft eine Einströmdüse für eine Filterpatrone.

Filterpatronen werden im Zusammenhang mit Filteranlagen zur Reinigung von mit Partikeln verunreinigtem Gas, insbesondere von staubhaltiger Luft in Abluftreinigungs-Anlagen, verwendet. Eine derartige Filteranlage ist beispielsweise aus der DE 44 05 597 C1 bekannt. In einer derartigen Filteranlage werden die Filterpatronen im wesentlichen waagerecht angeordnet in die Filterkammern eingebracht, wobei die Filterpatronen an einem Ende dicht an einer Stirnwand der die Filterpatrone aufnehmenden Filterkammer anliegen und mit ihrem gegenüberliegenden Ende einer der Filterkammer nachgeordneten Kammer zur Abfuhr des gereinigten Gases zugeordnet sind. In den genannten zweiten Kammern sind Druckluftbehälter angeordnet, die mit Membranventilen verbunden sind, die an auf das Kopfende der Filterpatrone angesetzten Gasleitelementen angebracht sind, über die Druckluft zu den kreisförmigen Öffnungen und von dort in die Hohlräume der Filterpatronen zum Abreinigen des Filtermaterials geleitet wird. Bei den Gasleitelementen handelt es sich im wesentlichen um parallel zur Strömungsrichtung der Druckluft angeordnete, beispielsweise in Form eines Kreuzes zueinander stehende Blechelemente.

Demgegenüber wird erfindungsgemäß eine Einströmdüse für eine Filterpatrone mit den Merkmalen des Anspruchs 1 vorgeschlagen. Die erfindungsgemäße Einströmdüse besteht aus formstabilem Material und weist einen dem Querschnitt der Filterpatrone angepaßten Ringkörper auf, auf dem mindestens eine sich insbesondere vom Mittelpunkt oder durch den Mittelpunkt des Ringkörpers radial erstreckende Luftleitrippe angeordnet ist. Konzentrisch zum Mittelpunkt des Ringkörpers ist des weiteren ein mit der mindestens einen Luftleitrippe verbundener, aerodynamisch geformter Kompressionskern vorgesehen. Durch den im Unterschied zum Stand der Technik vorgesehenen sogenannten Kompressionskern wird die auf die Filterpatrone gerichtete Druckluft derart abgeleitet, daß sie von der zentralen Längsachse der Filterpatrone weg zu deren Rand hin gelenkt und komprimiert wird. Durch diese Maßnahme trifft Druckluft bereits im Bereich des Kopfendes der Filterpatrone auf deren Seitenwände, wodurch das dort befindliche Filtermaterial abgereinigt wird. Die Druckluft pflanzt sich im Innern der Filterpatrone bis zu deren Ende hin fort, wobei aufgrund der Luftlenkung durch den Kompressionskern eine besonders effektive Abreinigung des Filtermaterials ermöglicht wird. Dies stellt gegenüber dem Stand der Technik einen bedeutenden Vorteil dar, da Untersuchungen ergaben, daß bei einem bloßen "Einschießen" von Druckluft in das Innere der Filterpatrone sich die Druckluft in erster Linie durch die Filterpatrone hindurchbewegt, an deren gegenüberliegendem Stirnende reflektiert wird und erst während des Rückwegs durch die Filterpatrone die Seitenwände in einem ausreichenden Maße beaufschlägt, daß diese abgereinigt werden. Bis die reflektierte Druckluft wieder am Kopfende, d.h. an dem Ende, an dem die Druckluft eingeschossen wird, angelangt ist, ist der Abreinigungseffekt abgeebt, so daß im Bereich des Kopfendes kein effektives Abreinigen des Filtermaterials erfolgt. Durch die Ausgestaltung der erfindungsgemäßen Einströmdüse mit dem beschriebenen Kompressionskern wird dem wie beschrieben abgeholfen.

Der Wirkdurchmesser des Kompressionskerns wird insbesondere in Abhängigkeit von Durchmesser und Länge der abzureinigenden Filterpatrone festgelegt. Er darf nicht zu klein sein, damit der gewünschte Effekt auch eintritt, auf der anderen Seite jedoch auch nicht zu groß, damit die Druckluft nicht gänzlich von der Eintrittsöffnung der Filterpatrone abgelenkt wird. Vorteilhafterweise beträgt der Wirkdurchmesser des Kompressionskerns etwa das 0,2- bis 0,8-fache des Innendurchmessers der zugeordneten Filterpatrone. Vorzugsweise beträgt der Wirkdurchmesser etwa das 0,4- bis 0,6-fache, in besonders bevorzugter Ausgestaltung etwa das 0,5-fache des Innendurchmessers der zugeordneten Filterpatrone.

In besonders vorteilhafter Ausgestaltung der Erfindung ist der Kompressionskern über im wesentlichen die Länge der zugeordneten Filterpatrone verlängert. Durch diese Maßnahme wird der angestrebte Effekt der verbesserten Beaufschlagung der Seitenwände (Mantelinnenfläche) der Filterpatrone weiter verstärkt. Die Verlängerung erfolgt vorzugsweise mittels eines an- oder aufsetzbaren Rohres, dessen Außendurchmesser im wesentlichen dem Wirkdurchmesser des Kompressionskerns entspricht.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

Figur 1    zeigt eine erfindungsgemäße Einströmdüse in Draufsicht.

Figur 2    zeigt die Einströmdüse der Figur 1 in geschnittener Darstellung gemäß der Schnittlinie A-A.

Figur 3    zeigt einen Ausschnitt aus einer Filteranlage zur Reinigung von partikelhaltigem Gas mit darin eingesetzten Filterpatronen in seitlicher, teilweise aufgeschnittener Ansicht, wobei die Filterpatronen mit erfindungsgemäßen Einströmdüsen versehen sind.

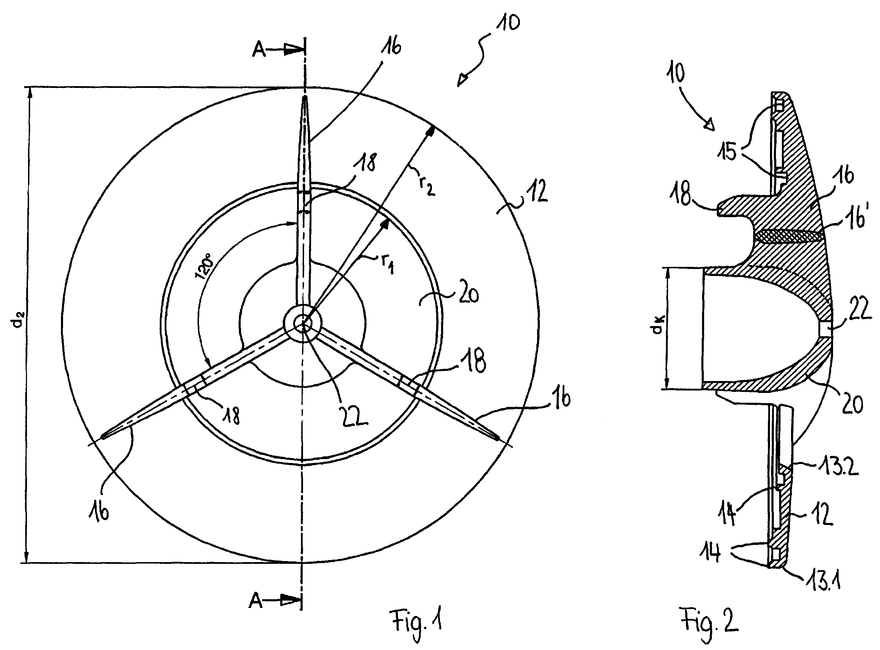

Figur 1 zeigt eine erfindungsgemäße Einströmdüse 10 in schematischer Darstellung in Draufsicht. Die Einströmdüse besteht aus einem Ringkörper 12 aus formstabilem Material, beispielsweise aus Gußaluminium, dessen Querschnitt der Filterpatrone angepaßt ist, auf die er aufzusetzen ist. Wie insbesondere auch aus Figur 2 ersichtlich ist, ist die Oberfläche des Ringkörpers 12, d.h. die Seite, die im aufgesetzten Zustand von der Filterpatrone wegweist, im wesentlichen eben mit leicht abgerundeten Kanten 13 (Außenkante 13.1 und Innenkante 13.2) ausgebildet. An der Unterseite des Ringkörpers 12, d.h. an der Seite, die im aufgesetzten Zustand auf die Filterpatrone zur Filterpatrone hinweist, sind verschiedene Vorsprünge 14 zum Ansetzen der Einströmdüse 10 auf die Filterpatrone sowie Nuten 15 zur Aufnahme von nicht näher dargestellten Dichtelementen vorgesehen.

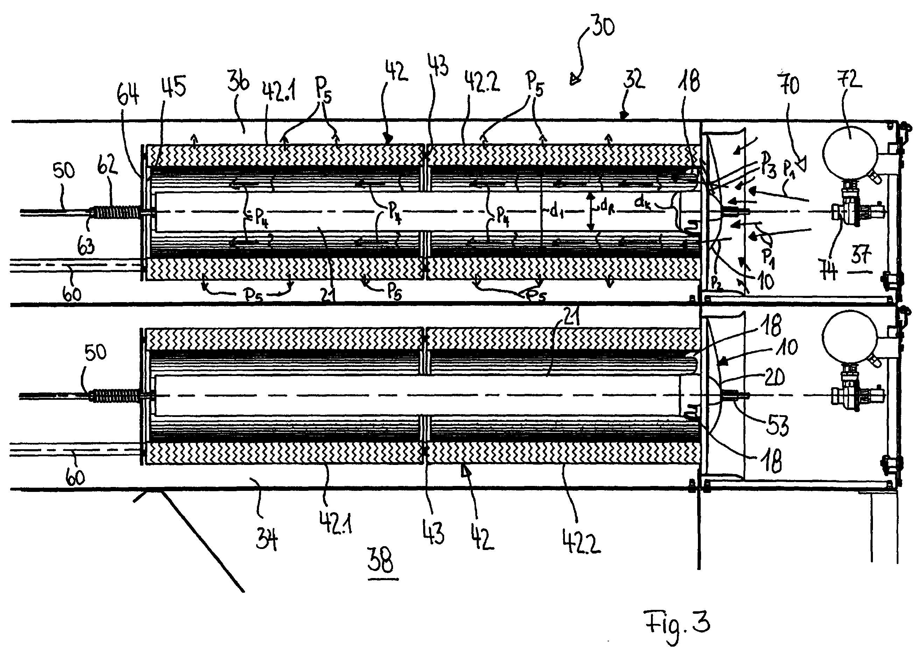

Auf dem Ringkörper 12 sind drei Luftleitrippen 16 angeordnet, die jeweils in einem Winkel von etwa 120° zueinander stehen. Die Luftleitrippen 16 sind vorteilhafterweise und wie im beschriebenen Ausführungsbeispiel dargestellt einstückig mit dem Ringkörper 12 ausgebildet. Die Luftleitrippen 16 sind aerodynamisch ausgebildet - in Figur 2 ist eng schraffiert der Querschnitt 16' der Luftleitrippe 16 eingezeichnet - und dienen einer kontrollierten Luftleitung von in eine mit der erfindungsgemäßen Einströmdüse 10 versehene Filterpatrone einzublasender Druckluft. An der Unterseite jeder Luftleitrippe 16 sind formschlüssig zum Innendurchmesser der zugeordneten Filterpatrone angeordnete Zentriernasen 18 ausgebildet. In der Draufsicht der Figur 1 sind die Zentriernasen 18 gestrichelt eingezeichnet. In Figur 3 ist dargestellt, wie die Zentriernasen 18 bei auf der Filterpatrone aufgesetzter Einströmdüse 10 an der Mantelinnenfläche der Filterpatrone anliegen.

Konzentrisch zum Mittelpunkt des Ringkörpers 12 ist des weiteren ein sogenannter Kompressionskern 20 vorgesehen, der mit den Luftleitrippen 16 verbunden und vorteilhafterweise einstückig mit diesen ausgebildet ist. Wie insbesondere aus der seitlichen Schnittdarstellung der Figur 2 erkennbar ist, ist der Kompressionskern 20 aerodynamisch ausgebildet und erinnert in seiner Form an eine Propellernase, wie sie aus dem Flugzeugbau bekannt ist. Im dargestellten Ausführungsbeispiel liegt der höchste, d.h. oberste Punkt des Kompressionskerns 20 oberhalb der Ebene des Ringkörpers 12 und die Luftleitrippen 16 sind vom Außenrand des Ringkörpers 12 zu dessen Mittelpunkt hin ansteigend ausgebildet, so daß sie auf derselben Höhe wie der Kompressionskern 20 in der Mitte des Ringkörpers 12 zusammenlaufen. Zur Materialersparnis ist der Kompressionskern 20 hohl ausgeführt. Der Kompressionskern 20 weist eine Mittelpunktsbohrung 22 auf.

Die Dimensionen der erfindungsgemäßen Einströmdüse 10 sind derart gewählt, daß die Fläche des Ringkörpers 12 im wesentlichen den Filtermaterialring der zugeordneten Filterpatrone überdeckt, d.h. der Innenradius $r_1$ des Ringkörpers 12 entspricht im wesentlichen dem Innenradius der zugeordneten Filterpatrone, während der Außenradius $r_2$ des Ringkörpers 12 den entsprechenden Außenradius der zugeordneten Filterpatrone etwas übersteigt, um einen dichten Abschluß der Filterpatrone zu erzielen. Der Wirkdurchmesser $d_K$ des Kompressionskerns 20 ist einiges kleiner als der Innendurchmesser $d_1$ der zugeordneten Filterpatrone, der im wesentlichen dem doppelten Innenradius $2r_1$ des Ringkörpers 12 entspricht. Im dargestellten Ausführungsbeispiel beträgt der Wirkdurchmesser $d_K$ des Kompressionskerns 20 etwas weniger als das 0,5-fache des Innendurchmessers $d_1$ der zugeordneten Filterpatrone. Es sind jedoch auch andere Größenverhältnisse Wirkdurchmesser:Innendurchmesser ($d_K$:$d_1$) möglich, die der Fachmann in Abhängigkeit der gegebenen Verhältnisse und insbesondere der tatsächlichen Abmessungen der zugeordneten Filterpatrone und der Einströmdüse wählt. Der in den Figuren 1 und 2 dargestellte und vorstehend beschriebene Einströmdüse weist einen Außendurchmesser $d_2 = 2r_2$ von etwa 380 mm auf.

Figur 3 zeigt einen Ausschnitt aus einer Filteranlage 30 mit einem aus zwei modular übereinander angeordneten Filterkammern 34, 36 gebildeten Filtergehäuse 32, das über einem nicht näher dargestellten Staubbunker 38 angeordnet ist. Eine derartige Filteranlage ist in der mit gleichem Datum eingereichten deutschen Patentanmeldung "Filteranlage und Vorrichtung zur Halterung von Filterpatronen" derselben Anmelderin ausführlich beschrieben.

In jeder der beiden Filterkammern 34, 36 sind parallel und auf gleicher Höhe horizontal nebeneinander mehrere Filterpatronen angeordnet, von denen in der Darstellung der Figur 3 jeweils nur eine Filterpatrone 42, nämlich die dem Betrachter am nächsten liegende, dargestellt ist, wobei im Ausführungsbeispiel der Figur 3 jede Filterpatrone 42 tatsächlich aus zwei kürzeren Teilpatronen 42.1, 42.2 zusammengesetzt ist. Diese Teilpatronen 42.1, 42.2 liegen koaxial hintereinander, wobei im Zwischenraum zwischen den beiden Teilpatronen 42.1, 42.2 jeweils ein Dichtring 43 angeordnet ist. Es handelt sich hierbei um konventionelle Filterpatronen, die im Stand der Technik wohl bekannt sind und auf deren detaillierte Beschreibung im Rahmen dieser Anmeldung verzichtet wird. Auch das Zusammensetzen von zwei oder mehreren Filterpatronen zu einer Gesamtpatrone ist aus dem Stand der Technik bekannt. Selbstverständlich ist die Erfindung auch zur Verwendung mit einer aus einer einzigen Patrone bestehenden Filterpatrone geeignet.

Die Filterpatronen 42 in den Filterkammern 34, 36 sind jeweils mit einer erfindungsgemäßen Einströmdüse 10 "verschlossen" (in der Darstellung der Figur 3 am rechten Kopfende der Filterpatronen 42). Die Befestigung der Filterpatronen 42 und der Einströmdüse 10 erfolgt mittels Tragrohren 60, auf denen die Filterpatronen 42 in bekannter Weise aufliegen, und einer sogenannten Spannstange 50, die sich im wesentlichen koaxial zur Längsmittelachse der Filterpatronen 42 erstreckt und am Kopfende der Filterpatronen durch die dazu vorgesehene Bohrung 22 im Kompressionskern 20 der Einströmdüse 10 geführt und dort mittels einer Spannmutter 53 festgelegt ist. Am gegenüberliegenden (in der Figur 3 nicht näher dargestellten) Stirnende der Filterkammern 34, 36 ist die Spannstange 50 beispielsweise mittels eines Nutensteins lösbar hintergreifend in eine an der Stirnwand der Filterkammer angeordnete Nut eingreifbar ausgebildet. Des weiteren umfaßt die Spannstange 50 ein der Spannstange 50 ihren Namen gebendes Spannmittel 62, das auf der Spannstange 50 mittels einer einen Anschlag bildenden Mutter 63 festgelegt ist und mit seinem anschlagfernen Ende eine Platte 64 beaufschlagt, die dazu geeignet ist, das zugeordnete Stirnende 45 der Filterpatrone 42 zu verschließen. Die genaue Funktionsweise der beschriebenen Spannstange ist in der bereits erwähnten, mit gleichem Datum eingereichten deutschen Patentanmeldung "Filteranlage und Vorrichtung zur Halterung von Filterpatronen" derselben Anmelderin ausführlich beschrieben.

Im dargestellten Ausführungsbeispiel ist der Kompressionskern 20 der Einströmdüse 10 über im wesentlichen die gesamte Länge der zugeordneten Filterpatrone 42 verlängert. Die Verlängerung des Kompressionskerns 20 erfolgt mittels eines an- bzw. aufgesetzten Rohres 21, dessen Außendurchmesser $d_R$ im wesentlichen dem Wirkdurchmesser $d_K$ des Kompressionskerns 20 entspricht. Die Ausrichtung und Festlegung des Rohres 21 erfolgt vorteilhafterweise mittels der Spannstange 50, wozu das Rohr 21 (nicht näher dargestellte) geeignete Führungsmittel aufweist.

Die Funktionsweise der erfindungsgemäßen Einströmdüse wird nachfolgend unter Bezugnahme auf die in der Darstellung der Figur 3 oben liegende Filterkammer 36 beschrieben.

Zur Abreinigung von am Filtermaterial der Filterpatrone 42 abgeschiedenen Staubpartikel wird Druckluft aus einer der Filterpatrone 42 zugeordneten Druckluftanlage 70 eingeblasen. Die Druckluftanlage 70 befindet sich in einer der Filterkammer 36 nachgeordneten zweiten Kammer 37 und umfaßt im wesentlichen einen Drucklufttank 72 und ein Abreinigungsventil 74. Die Auslaßöffnung des Abreinigungsventils 74 ist im wesentlichen koaxial zur Längsmittelachse der Filterpatrone 42 und somit zur Einströmdüse 10 angeordnet.

Die zur Abreinigung der Filterpatronen 42 aus dem Abreinigungsventil 74 ausgeblasene Druckluft trifft im Sinne der eingezeichneten Pfeile P1 auf der Einströmdüse 10. Ein Teil der Druckluft strömt dabei direkt durch den ringförmigen Zwischenraum zwischen Kompressionskern 20 und Ringkörper 12 in das Innere der Filterpatrone 42 (Pfeile P2). Ein anderer Teil der Druckluft trifft auf den Kompressionskern 20 auf und wird durch dessen aerodynamisch ausgebildete Oberfläche in Richtung des ringförmigen Zwischenraums zwischen Kompressionskern 20 und Ringkörper 12 abgeleitet und somit in das Innere der Filterpatrone 42 geleitet (Pfeile P3). Dadurch erfolgt erfindungsgemäß eine Kompression der auf die Filterpatrone 42 geleiteten Druckluft in einen ringförmigen Bereich entlang des aus Filtermaterial gebildeten Innenmantels der Filterpatrone. Durch den im Unterschied zum Stand der Technik vorgesehenen Kompressionskern 20 wird die Druckluft somit derart abgeleitet, daß sie von der Längsmittelachse der Filterpatrone weg zu deren Rand hin gelenkt und komprimiert wird. Durch diese Maßnahme trifft Druckluft im Sinne der Pfeile P3 bereits im Bereich des Kopfendes der Filterpatrone auf deren Seitenwände, wodurch das dort befindliche Filtermaterial abgereinigt wird, da die Druckluft durch das Filtermaterial nach außen strömt.

Die Druckluft pflanzt sich im Innern der Filterpatrone 42 im Sinne der eingezeichneten Pfeile P4 bis zu deren Ende hin fort. Durch die erfindungsgemäße Verlängerung des Kompressionskerns 20 durch das Rohr 21 wird die Komprimierung der eingeleiteten Druckluft auf den Ringbereich entlang des Innenmantels der Filterpatrone über die gesamte Länge der Filterpatrone aufrechterhalten. Die Druckluft tritt entlang der gesamten Länge der Filterpatrone durch das Filtermaterial nach außen und reinigt diese ab. Die Pfeile P5 symbolisieren durch die austretende Druckluft abgesprengte Staubteilchen.

Wie bereits eingangs beschrieben, stellt die erfindungsgemäße Luftleitung und -komprimierung durch den Kompressionskern 20 und dessen Verlängerung gegenüber dem Stand der Technik einen bedeutenden Vorteil dar, da nun bereits am drucklufteintrittsseitigen Kopfende der Filterpatrone 42 sofort eine effektive Abreinigung von Staubmaterial erfolgt, wohingegen im Stand der Technik dieser Bereich kaum bzw. sehr uneffektiv abgereinigt wurde. Auch die Abreinigung der restlichen Filterpatrone verläuft effektiver, da die Druckluft durch den Kompressionskern und dessen Verlängerung entlang dem Innenmantel der Filterpatrone komprimiert wird und sich dadurch die Durchtrittsgeschwindigkeit der Druckluft durch das Filtermaterial erhöht.

Selbstverständlich ist die Erfindung nicht auf das in den Zeichnungen dargestellte und der Beschreibung dargelegte Ausführungsbeispiel beschränkt. Vielmehr ist der Fachmann in der Lage, gleichwirkende alternative Ausgestaltungen der beschriebenen Einströmdüse mit einem auftreffende Druckluft in einen Ringbereich ableitenden Kompressionskern zu schaffen. So sind andere Ausgestaltungen der Luftleitrippen und/oder des Kompressionskerns möglich, bei denen die Oberfläche nach anderen Gesichtspunkten ausgeformt ist.

**Patentansprüche**

1. Einströmdüse für eine Filterpatrone, mit einem dem Querschnitt der Filterpatrone angepaßten Ringkörper (12) aus formstabilem Material, auf dem mindestens eine sich insbesondere vom Mittelpunkt oder durch den Mittelpunkt des Ringkörpers (12) radial erstreckende Luftleitrippe (16) angeordnet ist, wobei konzentrisch zum Mittelpunkt des Ringkörpers (12) ein mit der mindestens einen Luftleitrippe (16) verbundener, aerodynamisch geformter Kompressionskern (20) vorgesehen ist.

2. Einströmdüse nach Anspruch 1, bei dem der Wirkdurchmesser ($d_K$) des Kompressionskerns (20) etwa das 0,2- bis 0,8-fache des Innendurchmessers ($d_1$) der zugeordneten Filterpatrone (42) beträgt.

3. Einströmdüse nach Anspruch 2, bei dem der Wirkdurchmesser ($d_K$) des Kompressionskerns (20) etwa das 0,4- bis 0,6-fache des Innendurchmessers ($d_1$) der zugeordneten Filterpatrone (42) beträgt.

4. Einströmdüse nach Anspruch 3, bei dem der Wirkdurchmesser ($d_K$) des Kompressionskerns (20) etwa das 0,5-fache des Innendurchmessers ($d_1$) der zugeordneten Filterpatrone (42) beträgt.

5. Einströmdüse nach einem der Ansprüche 1 bis 4, bei dem drei jeweils unter einem Winkel von etwa 120° zueinander angeordnete Luftleitrippen (16) vorgesehen sind.

6. Einströmdüse nach einem der Ansprüche 1 bis 5, mit an der Unterseite formschlüssig zum Innendurchmesser ($d_1$) der zugeordneten Filterpatrone (42) angeordneten Zentriernasen (18).

7. Einströmdüse nach einem der vorstehenden Ansprüche, bei dem der Kompressionskern (20) über im wesentlichen die Lange der zugeordneten Filterpatrone (42) verlängert ist.

8. Einströmdüse nach Anspruch 7, bei dem die Verlängerung mittels eines an- oder aufsetzbaren Rohres (21) erfolgt, dessen Außendurchmesser ($d_R$) im wesentlichen dem Wirkdurchmesser ($d_K$) des Kompressionskerns (20) entspricht.

Fig. 2

Fig. 1

Fig. 3

EP 1 092 464 A2